# EUROPÄISCHE PATENTSCHRIFT

(11) **EP 4 156 473 B1**
(45) Veröffentlichungstag und Bekanntmachung des Hinweises auf die Patenterteilung: **21.02.2024**
(21) Anmeldenummer: 22184992.0
(22) Anmeldetag: 14.07.2022
(51) Int. Cl.: H02K 5/16, F16K 27/00, F16K 31/04, F16K 41/10, F16K 27/02

(54) **ANTRIEB**
DRIVE
ENTRAÎNEMENT

(30) Priorität: 22.09.2021 DE 102021124568
(43) Veröffentlichungstag der Anmeldung: 29.03.2023
(73) Patentinhaber: ebm-papst Landshut GmbH, 84030 Landshut (DE)
(72) Erfinder: Vrolijk, Enno Jan, 7751 DX Dalen (NL); Hadersdorfer, Stefan, 84079 Bruckberg (DE)
(74) Vertreter: Otten, Roth, Dobler & Partner mbB Patentanwälte

(56) Entgegenhaltungen:
- WO-A1-2013/143799
- DE-A1- 2 312 103
- DE-U1- 9 218 213
- US-B2- 9 683 674

## Beschreibung

Die Erfindung betrifft einen Antrieb gemäß dem Oberbegriff des Anspruchs 1.

Aus der WO 2013/143799 A1 ist ein als Gasregelventilantrieb ausgebildeter Antrieb bekannt, welcher einen Motorflansch, eine durch den Motorflansch geführte Stellstange, einen Bewegungserzeuger und ein einen Aufnahmeraum für den Bewegungserzeuger bildendes Motorgehäuse, sowie einen dem Motorflansch vorgelagerten Dichtungsraum umfasst, wobei der Dichtungsraum durch eine Bohrung entlüftet ist.

Es ist Aufgabe der Erfindung, einen Antrieb vorzuschlagen, welcher mit einem geringeren Fertigungsaufwand für die Entlüftung herstellbar ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Der erfindungsgemäße Antrieb, welcher insbesondere als Gasregelventilantrieb ausgebildet ist, umfasst einen Motorflansch, eine durch den Motorflansch geführte Stellstange, einen Bewegungserzeuger und ein einen Aufnahmeraum für den Bewegungserzeuger bildendes Motorgehäuse, sowie einen dem Motorflansch vorgelagerten Dichtungsraum, wobei der Dichtungsraum entlüftet ist, wobei der Antrieb eine Lagerbuchse umfasst, welche in einer Öffnung des Motorflansches aufgenommen ist und welche eine Öffnung aufweist, in welcher die Stellstange geführt ist, und wobei die Lagerbuchse und/oder der Motorflansch derart geformt ist bzw. sind, dass zwischen dem Motorflansch und der Lagerbuchse wenigstens eine exzentrisch zu einer Verschiebeachse der Stellstange angeordnete Nut gebildet ist, durch welche der Aufnahmeraum und der Dichtungsraum zur Entlüftung verbunden sind. Durch eine derartige Realisierung der Entlüftung kann auf einen zeitaufwendigen und teuren Bohrvorgang verzichtet werden und die Entlüftung durch ein urformendes Herstellungsverfahren oder ein additives Herstellungsverfahren oder ein schleifendes Verfahren mit gegenüber dem Bohren geringem Zeit- und Kostenaufwand hergestellt werden.

Weiterhin ist es vorgesehen, den Bewegungserzeuger als elektronisch gesteuerten elektrischen Schrittmotor auszubilden. Hierdurch ist eine schnelle und genaue Regelung möglich.

Es kann auch vorgesehen sein, die Lagerbuchse als Sinterbuchse auszubilden. Eine Sinterbuchse ist sowohl zur Führung der Stellstange als auch zur Ausbildung einer Nut geeignet.

Weiterhin ist es vorgesehen, die Nut an der Lagerbuchse auszubilden und diese auf der Mantelfläche der Lagerbuchse von einer erste Stirnfläche der Lagerbuchse zu einer zweiten Stirnfläche der Lagerbuchse auszubilden und im Querschnitt rinnenartig auszubilden, wobei es vorgesehen ist, der Nut insbesondere einen L-förmigen Verlauf zu geben. Eine derart ausgebildete Nut lässt sich mit den genannten Verfahren besonders einfach realisieren. Durch einen L-förmigen lässt sich die Nut auch an einer geometrisch komplexeren Lagerbuchse einfach realisieren.

Alternativ oder kumulativ ist es vorgesehen, die Nut an dem Motorflansch im Bereich seiner Öffnung auszubilden und von einer ersten Stirnfläche des Motorflansches zu einer zweiten Stirnfläche des Motorflansches verlaufen zu lassen und im Querschnitt rinnenartig auszubilden, wobei es vorgesehen ist, der Nut insbesondere einen L-förmigen Verlauf zu geben. Eine derart ausgebildete Nut lässt sich mit den genannten Verfahren besonders einfach realisieren. Durch einen L-förmigen lässt sich die Nut auch einfach an Lagerbuchsen mit unterschiedlicher Formgebung und Abmessungen anpassen.

Schließlich ist es, sofern an der Lagerbuchse und an dem Motorflansch eine Nut ausgebildet ist, die Lagerbuchse und den Motorflansch entweder derart aufeinander auszurichten, dass die an der Lagerbuchse ausgebildete Nut und die an dem Motorflansch ausgebildete Nut gegenüberliegend angeordnet sind und deren Querschnitte einen Kanal bilden oder derart aufeinander auszurichten, dass die an der Lagerbuchse ausgebildete Nut und die an dem Motorflansch ausgebildete Nut versetzt zueinander angeordnet sind und einen erste Kanal und einen zweiten Kanal bilden. Hierdurch ist sowohl an der Lagerbuchse, als auch an dem Motorflansch eine minimale Formveränderung zur Realisierung der gewünschten Entlüftung ausreichend, so dass sowohl die Lagerbuchse als auch der Motorflansch nur minimal geschwächt werden. Weiterhin lässt sich durch eine entsprechende Ausrichtung von Lagerbuchse und Motorflansch bei Bedarf mit geringer Beeinträchtigung der Stabilität und Verwendbarkeit von Motorflansch und Lagerbuchse ein Kanal mit vergleichsweise großem Querschnitt verwirklichen.

Weitere Einzelheiten der Erfindung werden in der Zeichnung anhand von schematisch dargestellten Ausführungsbeispielen beschrieben.

Hierbei zeigt:
- Figur 1:: ein Gasregelventil, welches eine erste Ausführungsvariante eines erfindungsgemäßen Antriebs umfasst und in geschnittener Seitenansicht gezeigt ist;
- Figur 2:: Motorflansch, Lagerbuchse und Stellstange einer zweiten Ausführungsvariante eines erfindungsgemäßen Antriebs in geschnittener Seitenansicht
- Figur 3:: eine perspektivische Ansicht der in der Figur 2 gezeigten Lagerbuchse und
- Figur 4:: Ausschnitte von Motorflansch, Lagerbuchse und Stellstange einer dritten Ausführungsvariante eines erfindungsgemäßen Antriebs in geschnittener Seitenansicht.

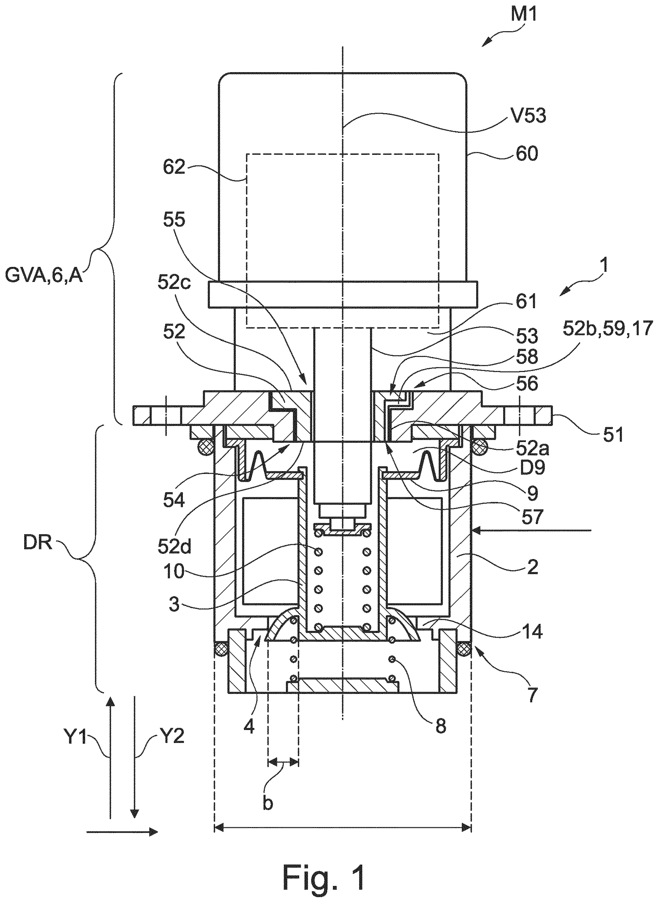

In Figur 1 ist ein Gasregelventil 1 in geschnittener Seitenansicht gezeigt. Das Gasregelventil 1 umfasst einen als elektrischen Schrittmotor 6 ausgebildeten Antrieb A1, der auf einem Direktdruckregler DR angeordnet ist. Der Antrieb A1 ist als Gasregelventilantrieb GVA ausgebildet. Das Gasregelventil 1 ist in seiner Gesamtheit als auswechselbares Modul M1 ausgebildet, wobei ein Reglergehäuse 2 der Teil des Moduls M1 ist, der in ein jeweiliges Endprodukt, welches z.B. als Krümmer (nicht dargestellt) ausgebildet ist, eingesteckt und darin fixiert wird. Das Reglergehäuse 2 ist hierfür als Kartusche 7 ausgebildet, die im Betrieb im Bereich eines Gasstroms angeordnet ist und welche die Gasmenge pro Zeit regelnde Bauteile aufnimmt. Ein hohl ausgebildeter Ventilkörper 3 ist in dem kartuschenartigen Reglergehäuse 2 von einer Membran 9 gehalten, wobei die Membran 9 an dem Reglergehäuse 2 befestigt ist und eine flächige Abgrenzung zu dem Schrittmotor 6 bildet.

Der Antrieb A1 umfasst einen Motorflansch 51, eine Lagerbuchse 52 und eine Stellstange 53. Hierbei ist die Lagerbuchse 52 in einer Öffnung 54 des Motorflansches 51 aufgenommen und hierbei ist die Stellstange 53 in einer Öffnung 55 der Lagerbuchse 52 linearverschiebbar geführt. Die Lagerbuchse 52 weist an einer Mantelfläche 52a eine Nut 52b auf, welche von einer ersten Stirnfläche 52c der Lagerbuchse 52 zu einer zweiten Stirnfläche 52d der Lagerbuchse 52 verläuft. Hierbei verläuft die Nut 52b in einem ersten Endbereich 56 und in einem zweiten Endbereich 57 achsparallel zu einer Verschiebeachse V53 der Stellstange 53 und in einem Mittelbereich 58 radial zu der Verschiebeachse V53. Durch die Nut 52b ist ein Kanal 59 gebildet, welcher die Funktion einer Ausgleichsöffnung 17 übernimmt. Dieser Kanal 59 ermöglicht einen Druckausgleich zwischen einem oberhalb der Membran 9 liegenden Dichtungsraum D9 des Reglergehäuses 2, welcher durch den Antrieb A1 verschlossen ist und einem durch ein Motorgehäuse 60 gebildeten Aufnahmeraum 61, in welchem der Antrieb A1 einen Bewegungserzeuger 62 aufnimmt, durch welchen die Stellstange 53 bewegt wird. Das Reglergehäuse 2 weist einen sich in radialer Richtung zum Zentrum hin erstreckenden Abschnitt 14 auf, der einen Ventilsitz 4 für den Ventilkörper 3 bildet. Zwischen dem Reglergehäuse 2 und dem Ventilkörper 3 ist eine erste Feder 8 angeordnet, die in der ersten axialen Richtung Y1 auf den Ventilkörper 3 wirkt, und diesen gegen den Ventilsitz 4 drückt. Ein Gaseinlass in das Gasregelventil 1 erfolgt in axialer Richtung zwischen der Membran 9 und dem Ventilsitz 4, sodass der Gasdruck in der ersten axialen Richtung Y1 gegen die Membran 9 und in der zweiten, entgegengesetzten axialen Richtung Y2 gegen den Ventilkörper 3 beziehungsweise gegen an dem Ventilkörper 3 sich in radialer Richtung nach außen hin erstreckende Abschnitte wirkt. Die Krafteinwirkung durch den Gasdruck auf den Ventilkörper 3 erfolgt somit in beide axiale Richtungen Y1, Y2 und ist in der Summe im Wesentlichen gleich Null. In Richtung der Verschiebeachse V53 kann von dem Schrittmotor 6 eine Kraft in die zweite axiale Richtung Y2 mittelbar auf den Ventilkörper 3 aufgebracht werden kann, um diesen zu versetzen. In der gezeigten Ausführung ist innerhalb des Ventilkörpers 3 eine zweite, sich in axialer Richtung erstreckende Feder 10 geordnet, auf welche die Stellstange 53 des Schrittmotors 6 in die zweite axiale Richtung Y2 wirkt, um den Ventilkörper 3 vom Ventilsitz 4 zu lösen. Die Krafteinwirkung durch den Schrittmotor 6 über die zweite Feder 10 erfolgt gegen die Kraft der ersten Feder 8 und einen außerhalb des Gasregelventils 1 herrschenden Außendruck. Der Ventilkörper 3 befindet sich hinsichtlich der Kräfte des Gasdrucks und der Federkräfte in einem Kräftegleichgewicht, so dass jeder Axialversatz der Stellstange 53 in der zweiten axialen Richtung Y2 unmittelbar einen entsprechenden Hub des Ventilkörpers 3 vom Ventilsitz 4 bedeutet. Durch dieses Kräftegleichgewicht ist es möglich, den Durchmesser des Reglergehäuses 2, des Ventilkörpers 3 und des durch den Ventilkörper 3 freigegebenen Gaswegs, welcher durch einen Ventilspalt mit Öffnungsweite b definiert ist, größer auszubilden, so dass der absolut notwendige Hub in axialer Richtung des Ventilkörpers 3 vom Ventilsitz auf 3 mm begrenzt werden kann. Das Reglergehäuse 2 weist einen Außendurchmesser von 30-50 mm, der Ventilkörper einen Außendurchmesser von 15-25 mm und der für den Gasweg am Ventilsitz 4 freigegebene umlaufende Ventilspalt eine Öffnungsweite von 3-5 mm auf. Der Kanal 59 weist einen mehrfach abgewinkelten Verlauf auf.

Gemäß einer nicht dargestellten Ausführungsvariante kann es auch vorgesehen sein, dass weiterhin an einer Mantelfläche der Öffnung des Motorflansches zu der Lagerbuchse hin eine Nut ausgebildet ist, durch welche zwischen dem Motorflansch und er Lagerbuchse ein Kanal gebildet wird, welcher den Dichtungsraum und den Aufnahmeraum verbindet, so dass der Dichtungsraum entlüftet ist und sich hier kein ungewünscht hoher Druck aufbauen kann.

Gemäß einer weiteren, nicht dargestellten Ausführungsvariante ist es auch vorgesehen, dass sowohl an der Lagerbuchse als auch an dem Motorflansch eine Nut ausgebildet ist. Sofern die Lagerbuchse und der Motorflansch so gegeneinander verdreht sind, dass sich die beiden Nuten gegenüber liegen, bilden diese zusammen einen Kanal, welcher die Entlüftung ermöglicht. Sofern die Lagerbuchse und der Motorflansch nicht aufeinander ausgerichtet sind, sind durch die beiden Nuten zwei Kanäle gebildet.

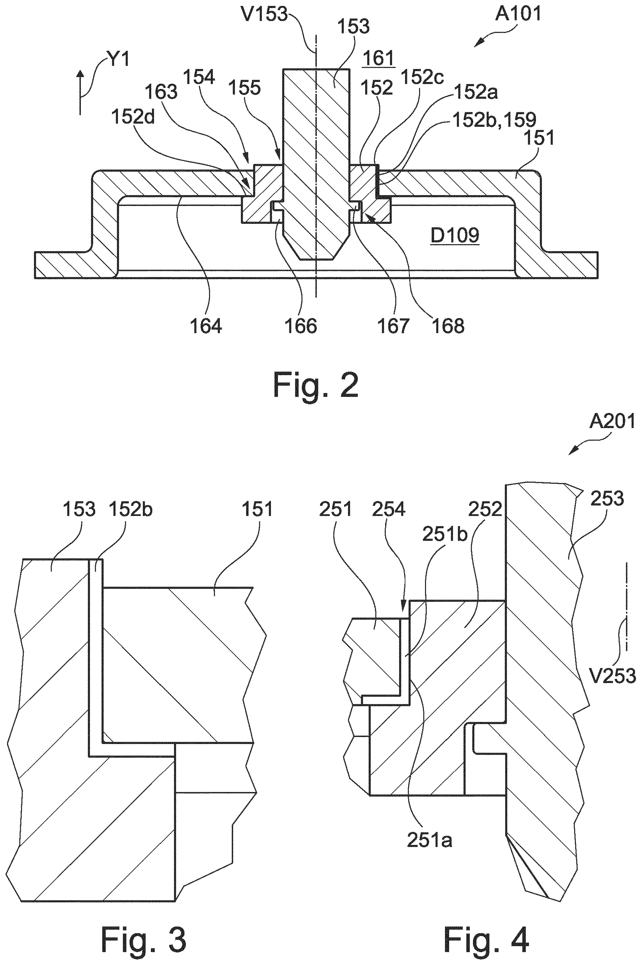

In der Figur 2 sind Motorflansch 151, Lagerbuchse 152 und Stellstange 153 einer zweiten Ausführungsvariante eines erfindungsgemäßen Antriebs A101 in geschnittener Seitenansicht gezeigt. Die Figur 3 zeigt ein Detail der Figur 2.

Weitere Bauteile des Antriebs A101 und eines vollständigen Gasregelventils, in welchem der Antrieb A101 verbaut ist, sind nicht gezeigt, aber vergleichbar zu der in der Figur 1 gezeigten ersten Ausführungsvariante ausgeführt. Insofern wird hier auf die Beschreibung zu der Figur 1 verwiesen.

Der Motorflansch 151 weist eine Öffnung 154 auf, in welche die Lagerbuchse 152 aufgenommen ist. Hierbei weist die Lagerbuchse 152 einen Absatz 163 auf, mit welchem diese an einer Unterseite 164 des Motorflansches 151 anliegt. Auch die Lagerbuchse 152 weist eine Öffnung 155 auf. Diese ist in der Form einer Stufenbohrung 166 ausgebildet. In der Öffnung 155 der Lagerbuchse 152 ist die Stellstange 153 geführt. Diese ist zylinderförmig ausgebildet und umfasst einen Kragen 167, mit welchen diese entlang ihrer Verschiebeachse V153 in einer vollständig in Y1-Richtung zurückgezogener Stellung an einem in der Öffnung 155 ausgebildeten Absatz 168 der Lagerbuchse 152 anliegt.

An einer Mantelfläche 152a der Lagerbuchse 152 ist eine L-förmig verlaufende Nut 152b ausgebildet, welche sich von einer ersten Stirnfläche 152c der Lagerbuchse zu einer zweiten Stirnfläche 152d der Lagerbuchse 152 erstreckt und exzentrisch versetzt zu der Verschiebeachse V153 der Stellstange 153 verläuft. Zwischen der Lagerbuchse 152 und dem Motorflansch 151 ist durch die Nut 152b ein Kanal 159 gebildet, welcher einen oberhalb des Motorflansches 151 liegenden Aufnahmeraum 161 und einen unterhalb des Motorflansches 151 liegenden Dichtungsraum D109 verbindet. Die Lagerbuchse 152 ist als Sinterbuchse mit Nut hergestellt, so dass zur Herstellung der Nut 152b keine nachträgliche Bearbeitung erforderlich ist. In der Detaildarstellung der Figur 3 ist der L-förmige Verlauf Nut 152b gut erkennbar.

In der Figur 4 sind Ausschnitte eines Motorflansches 251, einer Lagerbuchse 252 und einer Stellstange 253 einer dritten Ausführungsvariante eines erfindungsgemäßen Antriebs A201 in einer Detailansicht in geschnittener Seitenansicht gezeigt. Hierbei ist der grundsätzliche Aufbau mit der in den Figuren 2 und 3 gezeigten Ausführungsvariante vergleichbar. Insofern wird auch auf die Beschreibung zu den Figuren 2 und 3 verwiesen. Im Unterschied zu der dort gezeigt Lösung der Ausbildung einer Nut an einer Lagerbuchse ist bei der dritten Ausführungsvariante eine Nut 251b an einer Mantelfläche 251a einer Öffnung 254 des Motorflansches 251 ausgebildet. Auch diese Nut 251b verläuft exzentrische versetzt zu einer Verschiebeachse V253 der Stellstange 253.

Sofern der in den Figuren 2 und 3 gezeigte Motorflansch entsprechend dem in der Figur 4 gezeigten Motorflansch ausgebildet ist und der Motorflansch und die Lagerbuchse so gegeneinander verdreht sind, dass sich die Nut 152b und die Nut 251b gegenüberliegen, bilden diesen zusammen einen Kanal. Sofern die beiden Nuten 152b und 251b nicht aufeinander ausgerichtet sind, sind zwei Kanäle gebildet.

### Bezugszeichenliste:

- 1: Gasregelventil
- 2: kartuschenartiges Reglergehäuse
- 3: hohl ausgebildeter Ventilkörper
- 4: Ventilsitz
- 6: Schrittmotor
- 7: Kartusche
- 8: erste Feder
- 9: Membran
- 10: zweite Feder

- 14: Abschnitt

- 17: Ausgleichsöffnung

- 51: Motorflansch
- 52: Lagerbuchse
- 52a: Mantelfläche von 52
- 52b: Nut an 52
- 52c: erste Stirnfläche von 52
- 52d: zweite Stirnfläche von 52
- 53: Stellstange
- 54: Öffnung von 51
- 55: Öffnung von 52
- 56: erster Endbereich von 52b
- 57: zweiter Endbereich von 52b
- 58: Mittelbereich von 52b
- 59: Kanal
- 60: Motorgehäuse
- 61: Aufnahmeraum für 62
- 62: Bewegungserzeuger

- 151: Motorflansch
- 152: Lagerbuchse
- 152a: Mantelfläche von 152
- 152b: Nut
- 152c: erste Stirnfläche
- 152d: zweite Stirnfläche
- 153: Stellstange
- 154: Öffnung von 151
- 155: Öffnung von 152

- 159: Kanal

- 163: Absatz von 152
- 164: Unterseite von 151

- 166: Stufenbohrung
- 167: Kragen von 153
- 168: Absatz in 155
- 161: Aufnahmeraum

- 251: Motorflansch
- 251b: Nut an 251
- 251a: Mantelfläche von 251
- 252: Lagerbuchse
- 253: Stellstange
- 254: Öffnung von 251

- A1: Antrieb (erste Ausführungsvariante)
- A101: Antrieb (erste Ausführungsvariante)
- A201: Antrieb (dritte Ausführungsvariante)
- b: Öffnungsweite
- D9: Dichtungsraum oberhalb von 9
- D109: Dichtungsraum
- DR: Direktdruckregler
- GVA: Gasregelventilantrieb
- M1: auswechselbares Modul
- V53: Verschiebeachse von 53
- V153: Verschiebeachse von 153
- V253: Verschiebeachse von 253
- Y1: erste axiale Richtung
- Y2: zweite axiale Richtung

## Patentansprüche

1. Antrieb (A1; A101; A201), insbesondere Gasregelventilantrieb (GVA) umfassend einen Motorflansch (51; 151; 251), eine durch den Motorflansch (51; 151; 251) geführte Stellstange (53; 153; 253), einen Bewegungserzeuger (62) und ein einen Aufnahmeraum (61; 161) für den Bewegungserzeuger (62) bildendes Motorgehäuse(60), sowie einen dem Motorflansch (51; 151; 251) vorgelagerten Dichtungsraum (D9; D109), wobei der Dichtungsraum (D9; D109) entlüftet ist, wobei der Antrieb (A1; A101; A201) eine Lagerbuchse (52; 152; 252) umfasst, welche in einer Öffnung (54; 154; 254) des Motorflansches (51; 151; 251) aufgenommen ist und welche eine Öffnung (55; 155) aufweist, in welcher die Stellstange (53; 153; 253) geführt ist,
**dadurch gekennzeichnet,**
**dass** die Lagerbuchse (52; 152; 252) und/oder der Motorflansch (51; 151; 251) derart geformt ist oder sind, dass zwischen dem Motorflansch (51; 151; 251) und der Lagerbuchse (52; 152; 252) wenigstens eine exzentrisch zu einer Verschiebeachse (V53; V153; V253) der Stellstange (53; 153; 253) angeordnete Nut (52b; 152b; 251b) gebildet ist, durch welche der Aufnahmeraum (61; 161) und der Dichtungsraum (D9; D109) zur Entlüftung verbunden sind.

2. Antrieb nach Anspruch 1, **dadurch gekennzeichnet, dass** der Bewegungserzeuger (62) als elektronisch gesteuerter elektrischer Schrittmotor (6) ausgebildet ist.

3. Antrieb nach wenigstens einem der vorhergehenden Ansprüche, **dadurch gekennzeichnet, dass** die Lagerbuchse (52; 152; 252) als Sinterbuchse ausgebildet ist.

4. Antrieb nach wenigstens einem der vorhergehenden Ansprüche, **dadurch gekennzeichnet, dass** die Nut (52b; 152b) an der Lagerbuchse (52; 152) ausgebildet ist und auf deren Mantelfläche (52a; 152a) von einer erste Stirnfläche (52c; 152c) der Lagerbuchse (52; 152) zu einer zweiten Stirnfläche (52d; 152d) der Lagerbuchse (52; 152) verläuft und im Querschnitt rinnenartig ausgebildet ist, wobei die Nut (52b; 152b) insbesondere einen L-förmigen Verlauf oder einen mehrfach abgewinkelten Verlauf aufweist.

5. Antrieb nach wenigstens einem der Ansprüche 1 bis 3, **dadurch gekennzeichnet, dass** die Nut (251b) an dem Motorflansch (251) im Bereich seiner Öffnung (254) ausgebildet ist und von einer ersten Stirnfläche des Motorflansches (251) zu einer zweiten Stirnfläche des Motorflansches (251) verläuft und im Querschnitt rinnenartig ausgebildet ist, wobei die Nut (251b) insbesondere einen L-förmigen Verlauf oder einen mehrfach abgewinkelten Verlauf aufweist.

6. Antrieb nach Anspruch 4 und 5, **dadurch gekennzeichnet, dass** die Lagerbuchse (152) und der Motorflansch (251) derart aufeinander ausgerichtet sind,
- dass entweder die an der Lagerbuchse (152) ausgebildete Nut (152b) und die an dem Motorflansch (251) ausgebildete Nut (251b) gegenüberliegend angeordnet sind und deren Querschnitte einen Kanal bilden
- oder dass die an der Lagerbuchse (152) ausgebildete Nut (152b) und die an dem Motorflansch (251) ausgebildete Nut (251b) versetzt zueinander angeordnet sind und einen erste Kanal und einen zweiten Kanal bilden.

## Claims

1. Drive (A1; A101; A201), in particular gas-control-valve drive (GVA), comprising a motor flange (51; 151; 251), a control rod (53; 153; 253) which is guided through the motor flange (51; 151; 251), a movement generator (62), and a motor housing (60) which forms an accommodating space (61; 161) for the movement generator (62), and also a seal space (D9; D109) which is arranged before the motor flange (51; 151; 251), wherein the seal space (D9; D109) is de-aerated, wherein the drive (A1; A101; A201) comprises a bearing bushing (52; 152; 252) which is accommodated in an opening (54; 154; 254) of the motor flange (51; 151; 251) and which has an opening (55; 155) in which the control rod (53; 153; 253) is guided, **characterized in that** the bearing bushing (52; 152; 252) and/or the motor flange (51; 151; 251) are/is shaped in such a way that, between the motor flange (51; 151; 251) and the bearing bushing (52; 152; 252), there is formed at least one groove (52b; 152b; 251b) which is arranged eccentrically in relation to a displacement axis (V53; V153; V253) of the control rod (53; 153; 253) and by way of which the accommodating space (61; 161) and the seal space (D9; D109) are connected for de-aeration.

2. Drive according to Claim 1, **characterized in that** the movement generator (62) is in the form of an electronically controlled electric stepper motor (6).

3. Drive according to at least either of the preceding claims, **characterized in that** the bearing bushing (52; 152; 252) is in the form of a sintered bushing.

4. Drive according to at least one of the preceding claims, **characterized in that** the groove (52b; 152b) is formed on the bearing bushing (52; 152) and extends on its lateral surface (52a; 152a) from a first end face (52c; 152c) of the bearing bushing (52; 152) to a second end face (52d; 152d) of the bearing bushing (52; 152) and is of channel-like form in cross section, wherein the groove (52b; 152b) has in particular an L-shaped profile or a multiply angled profile.

5. Drive according to at least one of Claims 1 to 3, **characterized in that** the groove (251b) is formed on the motor flange (251) in the region of its opening (254) and extends from a first end face of the motor flange (251) to a second end face of the motor flange (251) and is of channel-like form in cross section, wherein the groove (251b) has in particular an L-shaped profile or a multiply angled profile.

6. Drive according to Claims 4 and 5, **characterized in that** the bearing bushing (152) and the motor flange (251) are aligned with one another in such a way
- that either the groove (152b) formed on the bearing bushing (152) and the groove (251b) formed on the motor flange (251) are arranged oppositely and their cross sections form a duct,
- or the groove (152b) formed on the bearing bushing (152) and the groove (251b) formed on the motor flange (251) are arranged offset from one another and form a first duct and a second duct.

## Revendications

1. Entraînement (A1; A101; A201), notamment entraînement de soupape de régulation de gaz (GVA) comprenant une bride de moteur (51 ; 151 ; 251), une tige de réglage (53 ; 153 ; 253) guidée par la bride de moteur (51 ; 151 ; 251), un générateur de mouvement (62) et un boîtier de moteur (60) formant un espace de réception (61 ; 161) pour le générateur de mouvement (62), ainsi qu'un espace d'étanchéité (D9 ; D109) situé en amont de la bride de moteur (51; 151; 251), l'espace d'étanchéité (D9 ; D109) étant ventilé, l'entraînement (A1; A101 ; A201) comprenant un coussinet (52 ; 152 ; 252) qui est reçu dans une ouverture (54 ; 154 ; 254) de la bride de moteur (51 ; 151 ; 251) et qui présente une ouverture (55 ; 155) dans laquelle la tige de réglage (53 ; 153 ; 253) est guidée,
**caractérisé en ce que**
le coussinet (52 ; 152 ; 252) et/ou la bride de moteur (51; 151; 251) est ou sont formés de telle sorte qu'entre la bride de moteur (51; 151; 251) et le coussinet (52 ; 152 ; 252), il est formée moins une rainure (52b ; 152b ; 251b) agencée de manière excentrée par rapport à un axe de déplacement (V53 ; V153 ; V253) de la tige de réglage (53 ; 153 ; 253), par laquelle l'espace de réception (61 ; 161) et l'espace d'étanchéité (D9 ; D109) sont reliés pour la ventilation.

2. Entraînement selon la revendication 1, **caractérisé en ce que** le générateur de mouvement (62) est réalisé sous forme de moteur électrique pas-à-pas (6) à commande électronique.

3. Entraînement selon au moins l'une quelconque des revendications précédentes, **caractérisé en ce que** le coussinet (52 ; 152 ; 252) est réalisé sous forme de coussinet fritté.

4. Entraînement selon au moins l'une quelconque des revendications précédentes, **caractérisé en ce que** la rainure (52b ; 152b) est réalisée sur le coussinet (52 ; 152) et s'étend sur sa surface d'enveloppe (52a ; 152a) d'une première surface frontale (52c ; 152c) du coussinet (52 ; 152) à une deuxième surface frontale (52d ; 152d) du coussinet (52 ; 152) et est réalisée dans la section transversale en forme de goulotte, la rainure (52b ; 152b) présentant notamment un tracé en forme de L ou un tracé coudé plusieurs fois.

5. Entraînement selon au moins l'une quelconque des revendications 1 à 3, **caractérisé en ce que** la rainure (251b) est réalisée sur la bride de moteur (251) dans la zone de son ouverture (254) et s'étend d'une première surface frontale de la bride de moteur (251) à une deuxième surface frontale de la bride de moteur (251) et est réalisée dans la section transversale sous forme de goulotte, la rainure (251b) présentant notamment un tracé en forme de L ou un tracé coudé plusieurs fois.

6. Entraînement selon les revendications 4 et 5, **caractérisé en ce que** le coussinet (152) et la bride de moteur (251) sont orientés l'un par rapport à l'autre de telle sorte que
- soit la rainure (152b) réalisée sur le coussinet (152) et la rainure (251b) réalisée sur la bride de moteur (251) sont agencées en face l'une de l'autre et leurs sections transversales forment un canal,
- soit la rainure (152b) réalisée sur le coussinet (152) et la rainure (251b) réalisée sur la bride de moteur (251) sont agencées en décalage l'une par rapport à l'autre et forment un premier canal et un deuxième canal.
